# EUROPEAN PATENT APPLICATION

(11) **EP 2 138 884 A1**
(43) Date of publication of application: **30.12.2009**
(21) Application number: 08722823.5
(22) Date of filing: 18.03.2008
(51) Int. Cl.: G02B 21/26

(54) **SUBSTAGE, STAGE AND MICROSCOPE PROVIDED WITH THE SUBSTAGE AND THE STAGE**

(30) Priority: 23.03.2007 JP 2007077127
(71) Applicant: Nikon Corporation, Chiyoda-ku Tokyo 100-8331 (JP)
(72) Inventor: TAKEUCHI, Atsushi, Tokyo 100-8331 (JP)
(74) Representative: Petzold, Silke
(86) International application number: PCT/JP2008/055626
(87) International publication number: WO 2008/117809

(57) **Abstract**

Provided is a substage for a microscope. The substage is provided with a plurality of fixing members for selectively fixing a plurality of stages, on which a sample is placed, each of which is equipped with a fixing member.

## Description

### Technical Field

The present invention relates to a substage, a stage for a microscope, and a microscope equipped therewith.

### Background Art

Although there have been various kinds of stages for a microscope in accordance with the dimension of the sample to be observed or the purpose of the observation, regarding the way of fixing to the microscope, they are classified into two large groups.

One is the most popular method that is fixed by a round dovetail, which is widely used upon observing biological sample (see, for example, Japanese Patent Application Laid-Open No. 2003-75730). Most of this kind of stages is a two-plate construction, in which the lower plate is fixed to the microscope, and the upper plate is moved in backward and forward direction (Y-direction) of the observer. A slide glass is placed on the upper plate, and the slide glass is held by a slide-glass holder that moves on the upper plate in left-and-right direction (X-direction), so that the slide glass can be moved in the plane of the slide glass (X-Y directions).

Upon fixing the lower plate to the microscope, the round dovetail is used. For example, although the case that a female dovetail is provided on the lower plate of the stage, and a mail dovetail is provided on the substage of the microscope is common, there is a case that the male and the female dovetails are constructed opposite manner.

The other is a method that is fixed by bolts, which is also widely used for fixing a large stage used for industrial purpose.

In the case of industrial purpose, since the sample to be observed is usually large and heavy, the two-plate-construction stage for observing biological sample is not suitable for this purpose, so that a three-plate-construction stage in which the upper plate on which the sample is placed is moved in the plane (X-Y directions) is used. In this case, not only the sample is heavy but also the stage itself is heavy in comparison with the two-plate-construction stage. In the three-plate-construction stage, the lowest plate is fixed to the microscope, and the middle plate is moved in left-and-right direction (Y-direction). Moreover, since the upper plate disposed in the highest position is constructed to be moved in left-and-right direction (X-direction), the upper plate can be moved in the plane (X-Y directions). Accordingly, the sample can be moved in X-Y directions by placing on the upper plate.

Upon fixing the lower plate on the microscope, bolts or screws are used. For example, the lower plate of the stage is provided with a plurality of counterbores (or bolt holes), and corresponding positions of the substage of the microscope are provided with screw holes. The stage and the substage are fixed by applying bolts or screws to the counterbores and the screw holes. Although positioning pin may be used for positioning the stage and the substage, it is not necessary to be used in the case positioning is not so strict. In this manner, although it is general that counterbores (or bolt holes) are formed on the stage, and screw holes are formed on the substage, there is a product that screw holes are formed on the stage, and counterbores are formed on the substage. Fixing by bolts or screws is characterized by strong fixation. Accordingly, it is a typical fixing method for the three-plate-construction stage such as a heavy and large stage.

However, in a conventional microscope, since a stage to be installed is determined by a microscope to be used, there is a problem that a round-dovetail-fixed stage and a screw-tightening-fixed stage cannot be freely exchanged to be installed in the microscope.

### Disclosure of the Invention

According to solve the problem, the present invention provides a substage for a microscope comprising: a plurality of fixing members for selectively fixing each of plurality of stages on which a sample is placed.

According to another aspect of the present invention, there is provided a stage on which a sample is placed equipped with a plurality of fixing members for selectively being fixed to each of plurality of substages for a microscope equipped with respective fixing members.

The present invention makes it possible to observe different shape samples with a single microscope since stages with different function can be selectively fixed to a single microscope.

### Brief Description of the Drawings

Figs. 1A-1C are partially external views showing a microscope body equipped with a substage according to a first embodiment of the present invention, in which Fig. 1A is a side view of the microscope body including a partially sectioned view of the substage, Fig. 1B is a view of the substage seen from an arrow A shown in Fig. 1A, and Fig. 1C is a view showing only the substage portion in Fig. 1B.
Figs. 2A-2C are views showing an example of a stage fixed to the substage 2 by a round dovetail, in which Fig. 2A is a top view, Fig. 2B is a side view, and Fig. 2C is a bottom view seen from an arrow B in Fig. 2B.
Figs. 3A-3C are views showing an example of the stage fixed to the substage 2 by means of screw tightening or bolt fixing, in which Fig. 3A is a top view, Fig. 3B is a side view, and Fig. 3C is a bottom view seen from an arrow B shown in Fig. 3B.
Figs. 4A-4C are partially external views showing a microscope body equipped with a substage according to a second embodiment of the present invention, in which Fig. 4A is a side view of the microscope body including a partially sectioned view of the substage,
Fig. 4B is a view of the substage seen from an arrow A shown in Fig. 4A, and Fig. 4C is a view showing only the substage portion in Fig. 4B.
Figs. 5A-5C are partially external views showing an example of the stage fixed to the substage 22 by a round dovetail, in which Fig. 5A is a top view, Fig. 5B is a side view, and Fig. 5C is a bottom view seen from an arrow B in Fig. 5B.
Figs. 6A-6C are views showing an example of a two-plate-construction stage capable of adopting both fixing methods of a round-dovetail fixing and a screw-tightening fixing, in which Fig. 6A is a top view, Fig. 6B is a side view, and Fig. 6C is a bottom view seen from an arrow B shown in Fig. 6B.
Figs. 7A-7C are views showing an example of a three-plate-construction stage capable of adopting both fixing methods of a round-dovetail fixing and a screw-tightening fixing, in which Fig. 7A is a top view, Fig. 7B is a side view, and Fig. 7C is a bottom view seen from an arrow B shown in Fig. 7B.
Fig. 8 is a partially sectioned side view showing a portion of the microscope according to a fourth embodiment of the present invention.
Fig. 9 is a partially sectioned view showing a portion of the microscope shown in Fig. 8 in which a three-plate-construction stage is installed.
Figs. 10A-10B are views showing a portion where a two-plate-construction stage installed in the microscope shown in Fig. 8, in which Fig. 10A is a side view showing with partially sectioned view, and Fig. 10B is a partially enlarged view.
Figs. 11A-11B are views showing a portion of a microscope according to a fifth embodiment of the present invention, in which Fig. 11A is a side view showing with partially sectioned view, and Fig. 11B is a partially enlarged view.
Figs. 12A-12B are views showing a portion of a microscope according to a sixth embodiment of the present invention, in which Fig. 12A is a side view showing with partially sectioned view, and Fig. 12B is a partially enlarged view.

### Embodiments for Carrying out the Invention

### <First Embodiment>

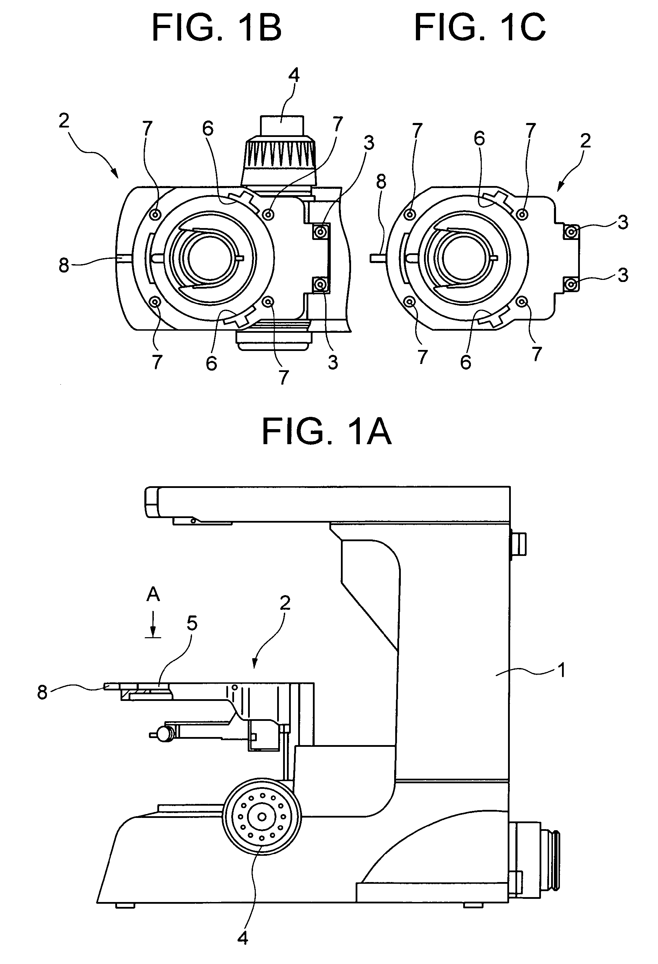

A first embodiment of the present invention is explained below with reference to accompanying drawings. Figs. 1A-1C are partially external views showing a microscope body equipped with a substage according to a first embodiment, in which Fig. 1A is a side view of the microscope body including a partially sectioned view of the substage, Fig. 1B is a view of the substage (in Fig. 1B, an upper surface of the condenser lens holder disposed under is seen from the opening portion of the substage) seen from an arrow A shown in Fig. 1A, and Fig. 1C is a view showing only the substage portion in Fig. 1B.

Substages according to the first and the second embodiments explained later have different constructions with each other for attaching to conventional stages. Accordingly, each stage equipped with each of these substages has a conventional, common fixing member.

In Fig. 1A, the substage 2 of the microscope body 1 is constructed to be movable in up-and-down direction through a roller and race portion 3, with rotating an up-and-down handle 4 by means of an unillustrated mechanism such as a rack and pinion. A stage on which a sample is placed and explained later is fixed to the substage 2.

In the substage 2, two different fixing members for selectively fixing the stage are provided. One of the stage-fixing member uses a round dovetail. Accordingly, two screws 6, 6 are provide on a hollow portion 5 of the substage 2 as a female dovetail.

As one of the other fixing member, four screw holes 7, 7, 7, 7 for fixing the stage with bolts or screws are provided on the substage 2.

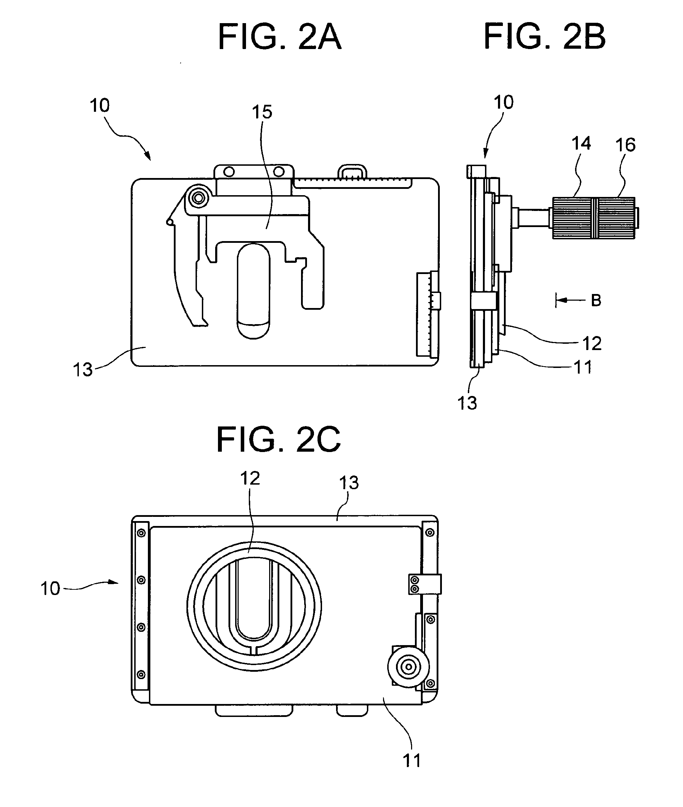

Then, one of conventional stages fixed to the substage 2 is explained. Figs. 2A-2C are views showing an example of a stage to be fixed to the substage 2 by a round dovetail, in which Fig. 2A is a top view, Fig. 2B is a side view, and Fig. 2C is a bottom view seen from an arrow B in Fig. 2B.

In Figs. 2A-2C, a male dovetail 12 that is a component of a round dovetail is provided on a lower plate 11 of the stage 10. The stage 10 that is fixed to the substage 2 shown in Figs. 1A-1C through the male dovetail 12 is a common stage for a biological microscope. In the stage 10, with rotating a handle 14, an upper plate 13 is constructed to be movable with respect to the lower plate 12 by an unillustrated rack and pinion in a direction up and down of the surface of Figs. 2A-2C through a guide mechanism such as a roller and race mechanism which is unillustrated. An unillustrated slide glass is placed on the upper surface of the upper plate 13. The slide glass is held by a slide-glass holder 15. With rotating a handle 16, the slide-glass holder 15 is linearly movable in a left-and-right direction of the surface of Figs. 2A-2C through an unillustrated rack and pinion mechanism.

The male dovetail 12 of the stage 10 is pressed to the two screws 6, 6 of the substage 2, and fixed to the substage 2 by a clamp pin 8. It is needless to say that the stage may be fixed by a mechanically processed female dovetail to the substage 2 instead of two screws 6, 6. Moreover, the two screws 6, 6 may be fixed by an adhesive to the substage 2 after adjusting them so that the position of the stage 10 comes to the center, or may not be fixed or glued to the substage 2 so that a user can adjust the stage 10.

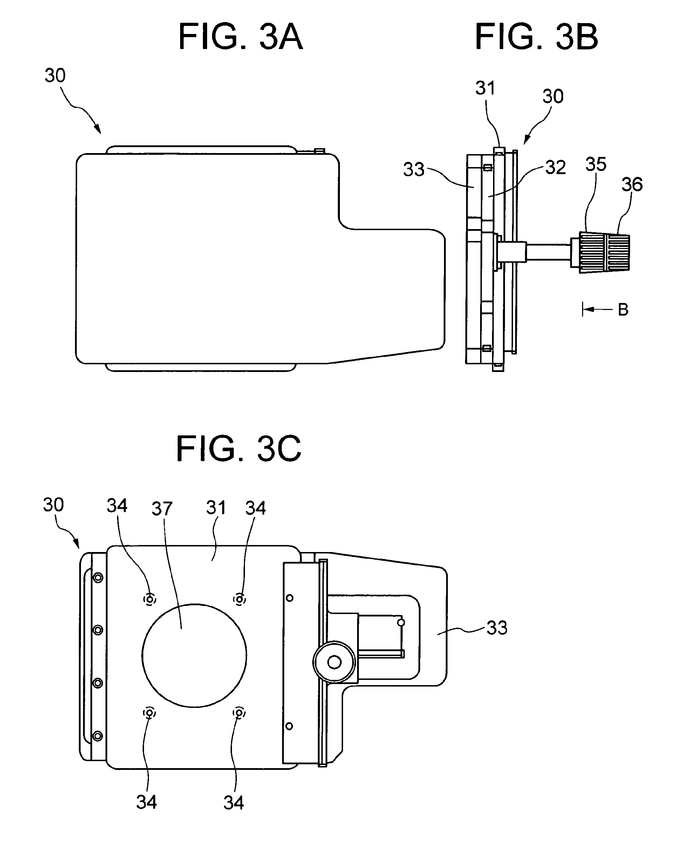

Then, one of the other conventional stages fixed to the substage 2 is explained. Figs. 3A-3C are views showing an example of the stage fixed to the substage 2 by means of screw tightening or bolt fixing, in which Fig. 3A is a top view, Fig. 3B is a side view, and Fig. 3C is a bottom view seen from an arrow B shown in Fig. 3B.

In Figs. 3A-3C, the stage 30 is a common stage for an industrial microscope whose lower plate 31 is fixed to the substage 2 shown in Figs. 1A-1C. With rotating a handle 35, a middle plate 32 is linearly movable in an up-and-down direction in the Figs. 3A-3C with respect to the lower plate 31 by means of a guide mechanism such as an unillustrated roller and race mechanism through an unillustrated rack and pinion mechanism. With rotating a handle 36, an upper plate 33 is linearly movable in a left-and-right direction in the Figs. 3A-3C with respect to the middle plate 32 by means of a guide mechanism such as an unillustrated roller and race mechanism through an unillustrated rack and pinion mechanism.

With such a three-plate-construction, the upper plate 33 can be moved 2-dimensionary in X-Y plane. Accordingly, the sample is moved in X-Y plane together with the upper plate 33, movement in all directions can be performed smoothly through a roller and race mechanism unlike the case of the above-described two-plate-construction.

Four counterbores 34, 34, 34, 34 for fixing the substage 2 to the screw holes 7, 7, 7, 7 shown in Figs. 1A-1C are provided on the lower plate 31. The counterbores 34, 34, 34, 34 are formed from upper side of the stage 30 in order to tighten the screw from upper side (the surface of Fig. 3A). (Fig. 3C is a bottom view of the stage 30 seen from the bottom side, and in Fig. 3C, from the rear side of the lower plate 31, in other words, from the middle plate 32 side, counterbores 34, 34, 34, 34 are provided.)

When the stage 30 is fixed to the substage 2, the lower plate 31 is placed on the substage 2, while exposing the counterbores 34, 34, the middle plate 32 is moved to one side, for example, an opposite side from the observer in Y-direction, so that positional adjustment to the substage 2 is carried out in X-Y plane, and then the lower plate 31 is fixed to the substage 2 by unillustrated bolts to screw holes 7, 7.

When positional adjustment between the lower plate 31 of the stage 30 and the substage 2 is not critical, they may be roughly fixed. In order to fix precisely, a fitting portion or a positioning pin may be provided between the lower plate 31 of the stage 30 and the substage 2. In order to reduce the weight a partially cut out circular portion 37 is formed on the lower plate 31.

As described above, in the first embodiment, by providing two screws 6, 6 and four screw holes 7, 7, 7, 7 as a female dovetail to a substage 2 of the microscope body 1, a conventional biological sample stage 10 with a male dovetail 12 and, for example, a conventional industrial stage 30 with four counterbores 34, 34, 34, 34 can be selectively attached. As a result, the user can use a biological sample stage 10 and an industrial stage 30 with exchanging manner by a single microscope body 1. Accordingly, for example, when a user owns a microscope with a biological sample stage 10, it is enough for the user to get only the industrial stage 30. Therefore, it is not necessary to newly introduce a microscope with an industrial stage 30 as is conventional case, so that introduction cost can be saved.

Furthermore, with constructing a substage 2 exchangeably to a microscope body 1 in use, it becomes possible to easily use both of the stage 10 and the stage 30 selectively.

### <Second Embodiment>

Then, a substage and a stage according to a second embodiment of the present invention are explained with reference to accompanying drawings. In the substage according to the second embodiment, different point is that the female dovetail of the substage according to the first embodiment is changed to a male dovetail, and in accordance with this the male dovetail in the stage is changed to a female dovetail. The same construction as the first embodiment is attached to the same symbol.

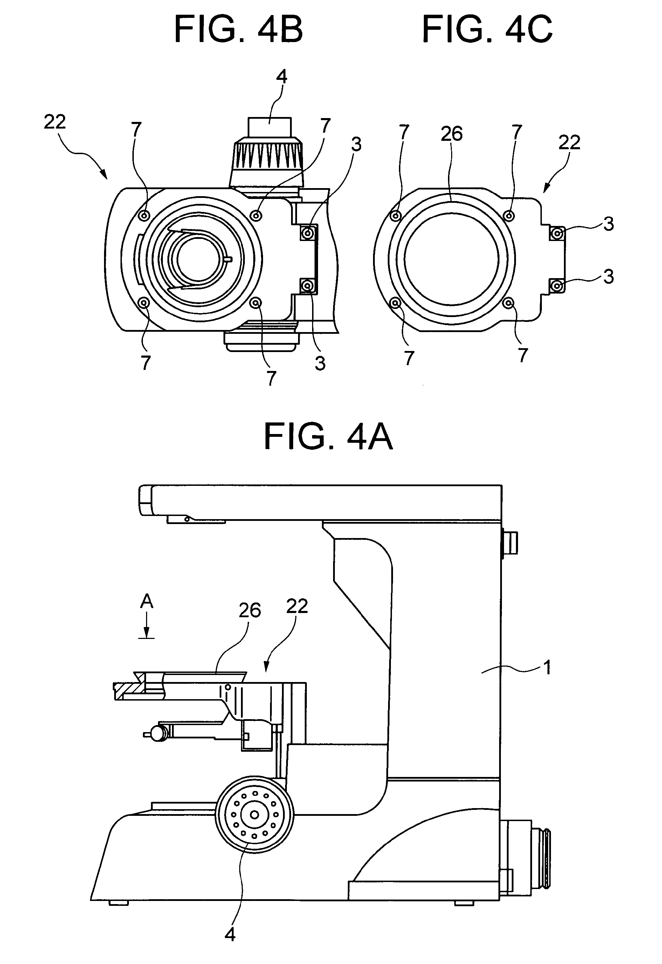

Figs. 4A-4C are partially external views showing a microscope body equipped with a substage according to a second embodiment of the present invention, in which Fig. 4A is a side view of the microscope body including a partially sectioned view of the substage, Fig. 4B is a view of the substage (in Fig. 4B, an upper surface of the condenser lens holder disposed under is seen from the opening portion of the substage) seen from an arrow A shown in Fig. 4A, and Fig. 4C is a view showing only the substage portion in Fig. 4B.

In Figs. 4A-4C, the substage 22 of the microscope body 1 is constructed to be movable in up-and-down direction through a roller and race portion 3, with rotating an up and down handle 4 by means of an unillustrated mechanism such as a rack and pinion mechanism. A stage on which a sample is placed and explained later is fixed to the substage 22.

In the substage 22, two different fixing members for selectively fixing the stage are provided. One of the stage-fixing members uses a round dovetail. Accordingly, a male dovetail 26 is provided on upper portion of the substage 22.

As one of the other fixing members, four screw holes 7, 7, 7, 7 for fixing the stage with bolts or screws are provided on the substage 22. This is the same as the first embodiment.

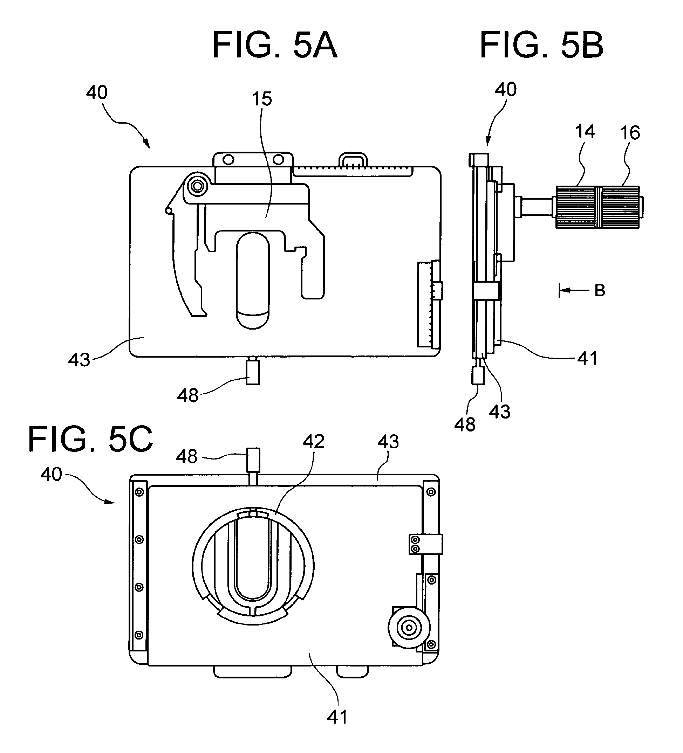

Then, one of conventional stages fixed to the substage 22 is explained. Figs. 5A-5C are views showing an example of the stage fixed to the substage 22 by a round dovetail, in which Fig. 5A is a top view, Fig. 5B is a side view, and Fig. 5C is a bottom view seen from an arrow B in Fig. 5B.

In Figs. 5A-5C, a female dovetail 42 that is a component of a round dovetail is provided on a lower plate 41 of the stage 40. The stage 40 is a stage for a common biological microscope to be fixed to the substage 22 shown in Figs. 4A-4C through the female dovetail 42. The stage 40 that is fixed to the substage 22 shown in Figs. 4A-4C through the female dovetail 42 is a common stage for a biological microscope. In the stage 40, with rotating a handle 14, an upper plate 43 is movable with respect to the lower plate 41 by an unillustrated rack and pinion mechanism in an up-and-down direction of the surface of Figs. 5A-5C through a guide mechanism such as a roller and race mechanism which is unillustrated. An unillustrated slide glass is placed on the upper surface of the upper plate 43. The slide glass is held by a slide-glass holder 15. With rotating a handle 16, the slide-glass holder 15 is linearly movable in a left-and-right direction of the surface of Figs. 5A-5C through an unillustrated rack and pinion mechanism.

Positioning of the stage 40 is carried out by the female dovetail 42 of the stage 40 and the male dovetail 26 of the substage 22, and the stage 40 is fixed to the substage 22 by a clamp pin 48 provided on the stage 40. The clamp pin 48 is provided on the lower plate 41 of the stage 40.

One of the other stages fixed to the substage 22 is the stage 30 shown in Figs. 3A-3C that is fixed to the substage 22 by means of screw tightening or bolt fixing as same as the first embodiment. The way to fix the stage 30 to the substage 22 is the same as the first embodiment, so that duplicated explanations are omitted. Since the male dovetail 26 of the substage 22 is inserted to a circular portion 37 formed on the lower plate 31 of the stage 30, it does not obstruct upon connecting the stage 30 to the substage 22.

As described above, in the second embodiment, with providing a male dovetail 26 and four screw holes 7, 7, 7, 7 to the substage 22 of the microscope body 1, it becomes possible to attach selectively both of, for example, a conventional biological sample stage 40 with a female dovetail 42 and, for example, a conventional industrial stage 30 with four counterbores 34, 34, 34, 34. As a result, the user can use a biological sample stage 40 and an industrial stage 30 with exchanging manner by a single microscope body 1. Accordingly, for example, when a user owns a microscope with a biological sample stage 40, it is enough for the user to get only the industrial stage 30. Therefore, it is not necessary to newly introduce a microscope with an industrial stage 30 as is conventional case, so that introduction cost can be reduced.

Furthermore, with constructing a substage 22 exchangeably to a microscope body 1 in use, it becomes possible to easily use both of the stage 40 and the stage 30.

### <Third Embodiment>

Then, a stage according to a third embodiment of the present invention is explained with reference to accompanying drawings. The present embodiment is an example that the present invention is adapted to a stage. In the first and the second embodiments, although substages having different fixing members for selectively fixing a stage are explained, in the third embodiment, an example that both of a round-dovetail fixing and a screw-tightening fixing are provided on a stage side is explained.

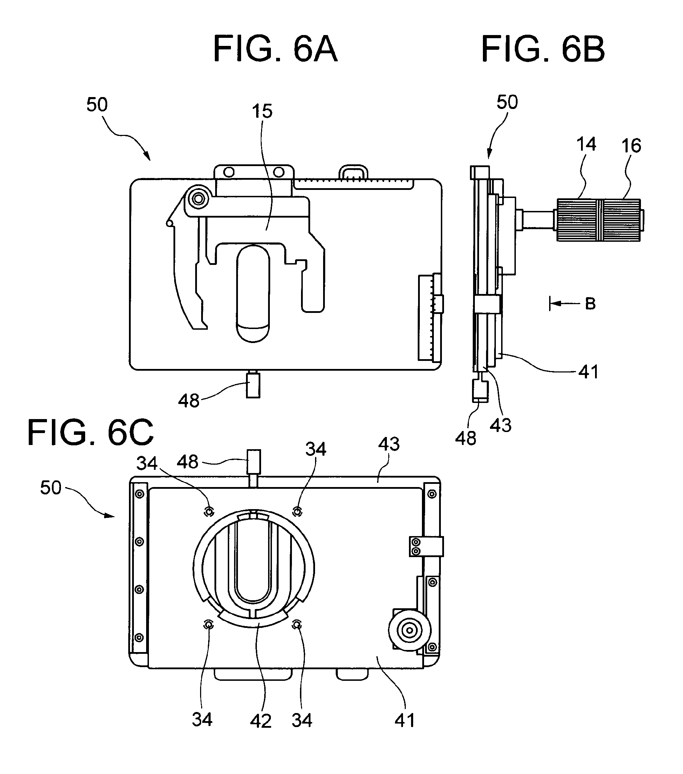

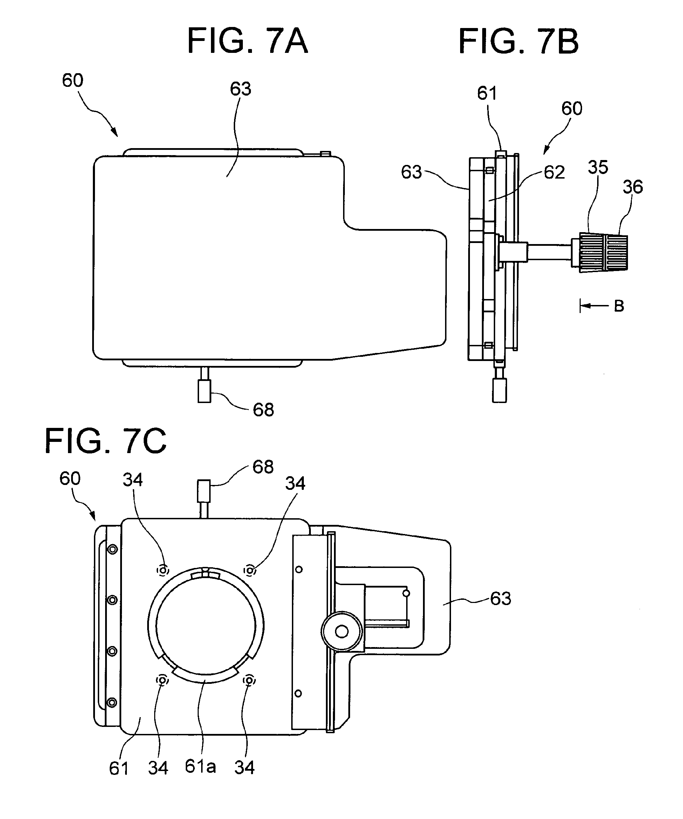

In the present embodiment, the substage has a conventional construction. Figs. 6A-6C are views showing an example of a two-plate-construction stage capable of adopting both fixing methods of a round-dovetail fixing and a screw-tightening fixing, in which Fig. 6A is a top view, Fig. 6B is a side view, and Fig. 6C is a bottom view seen from an arrow B shown in Fig. 6B. Figs. 7A-7C are views showing an example of a three-plate-construction stage capable of adopting both fixing methods of a round-dovetail fixing and a screw-tightening fixing, in which Fig. 7A is a top view, Fig. 7B is a side view, and Fig. 7C is a bottom view seen from an arrow B shown in Fig. 7B. Figs. 6A-6C has similar construction as Figs. 5A-5C, and Figs. 7A-7C has similar construction as Figs. 3A-3C, so that the similar construction is attached to the same symbol for the explanation.

In Figs. 6A-6C, a female dovetail 42 that is a component of a round dovetail is provided on the lower plate 41 of the stage 50, and the lower plate 41 is fixed to a substage with a male dovetail through the female dovetail 42. In the stage 50, with rotating a handle 14, an upper plate 43 is movable with respect to the lower plate 41 by an unillustrated rack and pinion mechanism in a direction up and down of the surface of Figs. 6A-6C by a guide mechanism such as a roller and race mechanism which is unillustrated. An unillustrated slide glass is placed on the upper surface of the upper plate 43. The slide glass is held by a slide-glass holder 15. With rotating a handle 16, the slide-glass holder 15 is linearly movable in a left-and-right direction of the surface of Figs. 6A-6C through an unillustrated rack and pinion mechanism.

On the lower plate 41 of the stage 50, four counterbores 34, 34, 34, 34 for being used upon fixing to screw holes of a conventional industrial substage are provided. Counterbores 34, 34, 34, 34 are formed from upside of the stage 50 for tightening by screws from upside (the surface of Fig. 6A). (Fig. 6C is a bottom view of the stage 50 seen from lower side. In Fig. 6C, counterbores 34, 34, 34, 34 are formed from the opposite side of the lower plate 41, in other words, from the upper plate 43 side.)

Positioning is carried out by the female dovetail 42 of the stage 50 and a male dovetail of a conventional substage, and the stage 50 is fixed to the substage by a clump pin 48 provided on the stage 50. The clump pin 48 is provided on the lower plate 41 of the stage 50.

Moreover, when the stage 50 is fixed to a substage for a conventional industrial microscope, the lower plate 41 is placed on the substage, while the counter bores 34, 34 being exposed the upper plate 43 is moved to one side, for example, an opposite side from the observer in Y-direction, so that positional adjustment to the substage is carried out in X-Y plane, and then the stage 50 is fixed to the screw holes by unillustrated bolts.

In Figs. 7A-7C, a female dovetail 61a which is an element of a round dovetail is provided on the lower plate 61 of the stage 60, and the lower plate 61 is fixed to the substage with a conventional male dovetail through the female dovetail 61a. With rotating a handle 35, a middle plate 62 is linearly movable in an up-and-down direction in the Figs. 7A-7C with respect to the lower plate 61 by means of a guide mechanism such as an unillustrated roller and race mechanism through an unillustrated rack and pinion mechanism. With rotating a handle 36, an upper plate 63 is linearly movable in a left-and-right direction in the Figs. 7A-7C with respect to the middle plate 62 by means of a guide mechanism such as an unillustrated roller and race mechanism through an unillustrated rack and pinion mechanism.

With such a three-plate-construction, the upper plate 63 can be moved 2-dimensionary in X-Y plane. Accordingly, the sample is moved in X-Y plane together with the upper plate 63, movement in all directions can be performed smoothly through a roller and race mechanism unlike the case of the above-described two-plate-construction.

Four counterbores 34, 34, 34, 34 for fixing to the screw holes of a substage of a conventional industrial microscope are provided on the lower plate 61. The counterbores 34, 34, 34, 34 are formed from upper side of the stage 30 [*sic*] in order to be able to tighten the screw from upper side (the surface of Fig. 7A). (Fig. 6C is a bottom view of the stage 60 seen from the bottom side, and in Fig. 6C, from the rear side of the lower plate 61, in other words, from the middle plate 62 side, counterbores 34, 34, 34, 34 are provided.)

When the stage 60 is fixed to a conventional substage, the lower plate 61 is placed on the substage, and while exposing the counterbores 34, 34, the middle plate 62 is moved to one side, for example, an opposite side from the observer in Y-direction, so that positional adjustment to the substage is carried out in X-Y plane, and then the stage 60 is fixed to the substage by unillustrated bolts to screw holes 7, 7.

As described above, in the third embodiment, a female dovetail 42 and four counterbores 34, 34, 34, 34 are provided on the stage 50, and a female dovetail 61a and four counterbores 34, 34, 34, 34 are provided on the stage 60. With this configuration, it becomes possible to provide a stage capable of selectively fixing to both of a substage of a microscope equipped with a stage with a male dovetail for a conventional biological microscope and a substage of a microscope equipped with a stage without a male dovetail for a conventional industrial microscope. As a result, the user can use both of a microscope for a biological sample and an industrial microscope by a single stage of two-plate-construction stage 50 or three-plate-construction stage 60.

For example, in a case a user having a biological microscope, only a stage for an industrial microscope, and a substage according to the present invention capable of attaching to the stage of the biological microscope may be purchased. Moreover, when a microscope equipped with a substage according to the present invention is purchased, only conventional stages for a biological microscope and for an industrial microscope may be purchased.

Furthermore, a microscope having a substage according to the first embodiment or the second embodiment and a stage according to the third embodiment can be constructed.

### <Fourth Embodiment>

Then, a fourth embodiment of the present invention is explained.

When a three-plate-construction stage for an industrial microscope is replaced with a two-plate-construction stage for a biological microscope, positional relation of a condenser lens for a biological stage is different from that of a condenser lens for an industrial stage. Accordingly, when the condenser lens is raised, it may happen that the condenser lens hits on the slide glass or the stage before the condenser holder contacts with the lower side of the substage. In this case, when the stage is replaced from a thick one to a thin one, it is necessary to prevent the condenser lens from hitting to a slide glass or a stage. The present embodiment is an embodiment that even the stage is replaced from a thick one to a thin one, with using a magnet 134 and a piece member 135 described later, the condenser lens is made not to hit the slide glass or the stage.

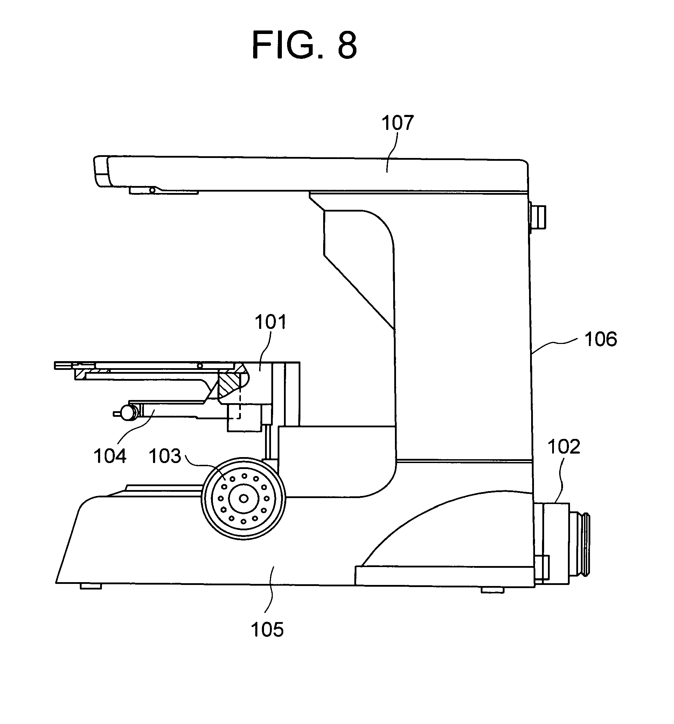

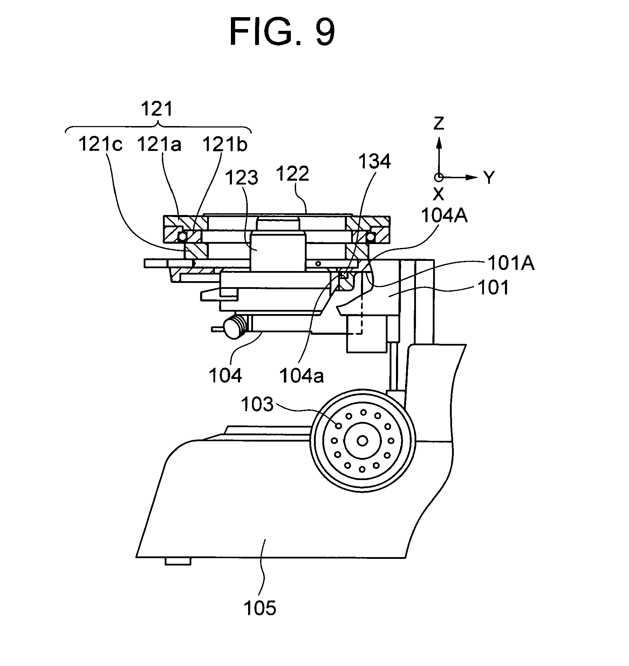

The present embodiment is explained below with reference to accompanying drawings. Fig. 8 is a partially sectioned side view showing a portion of the microscope according to a fourth embodiment of the present invention. Fig. 9 is a partially sectioned view showing a portion of the microscope shown in Fig. 8 in which a three-plate-construction stage is installed.

The microscope includes a base 105, a support 106, a cantilever arm 107, a substage 101, a condenser lens holder 104, and an up-and-down handle 103 for moving the substage 101 and the condenser lens holder 104 in the up-and-down direction.

The support 106 extending in the vertical direction is provided at one end of the base 105. On the rear portion of the base 105, there is provided an adapter 102 for attaching a transparent illumination lamp (not shown). The cantilever arm 107 extending in a horizontal direction is provided on the upper end of the support 106. On the lower portion of the cantilever arm 107, an objective lens (not shown) is provided through a revolver (not shown), and, on the upper portion, a body tube with an eyepiece (not shown) is provided.

The up-and-down handle 103 is provided on the base 105. The up-end-down handle 103 moves the substage 101 in a direction parallel to the support 106, in other words, in a direction along the optical axis of the objective lens to be attached. The substage 101 has the same construction as the one according to the first or the second embodiment, and has two fixing members for selectively fixing the stage thereto.

The condenser holder 104 is provided under the substage 101 movably up-and-down with respect to the substage 101. As shown in Fig. 9, a condenser lens 123 is held by the condenser lens holder 104. The condenser lens 123 and the condenser lens holder 104 are moved up-and-down in a body. With moving the condenser lens holder 104 up-and-down, the condenser lens 123 can be positioned.

On the upper surface of the substage 101, a stage 121 is fixed. The stage 121 is constructed by a three-plate-construction that is composed of an upper plate 121a, a middle plate 121b, and a lower plate 121c. The upper plate 121a is movable in an X-direction with respect to the middle plate 121b, and the middle plate 121b is movable in a Y-direction with respect to the lower plate 121c. On the upper surface of the upper plate 121a, a slide glass 122 is placed for covering an opening. The lower plate 121c is fixed to the upper surface of the substage 101 by bolts (not shown). With this configuration, it becomes possible to move the slide glass 122 two-dimensionally.

On a dented portion formed on an upper surface 104A of the condenser lens holder 104 that is opposite to the lower surface 101A of the substage 101, the magnet 134 (such as a ferrite magnet, and a rare-earth cobalt magnet) is fixed by an adhesive agent. The magnet 134 is opposite to the lower surface 104A of the substage 101 with a narrow gap.

In the case of attaching a three-plate-construction stage as shown in Fig. 9, when the condenser lens holder 104 is raised, the upper surface 104A of the condenser lens holder 104 is in contact with the lower surface 101A of the substage 101, and the upper movement of the condenser lens holder 104 is restricted so as to prevent the condenser lens 123 from colliding with the slide glass 122.

Then, an adjusting method of illumination state is explained.

In the case of a microscope where a stage 121 constructed by three-plate-construction composed of 121a, 121b, and 121c, with rotating the stage up-and-down handle 103 to move the substage 101 up-and-down to focus on the upper surface (observation surface) of the slide glass 122. Then, stopping down the field stop (not shown) of the transmission illumination to get the image in the field.

Then, with focusing on the observation surface, the condenser lens holder 104 is moved up (in Z-direction) to make the upper surface 104A of the condenser lens holder 104 contact with the lower surface 101A of the substage 101. In this instance, the condenser lens 123 is moved up in a body with the condenser lens holder 104.

In this state, since the microscope shown in Fig. 9 is designed as a microscope on which a stage 121 composed of a three-plate-construction with 121a, 121b, and 121c is disposed in consideration with an arrangement of the condenser lens holder 104, the upper end of the condenser lens 123 is disposed lower than the upper surface of the upper plate 121a, so that the condenser lens 123 does not collide with the slide glass 122.

Then, the condenser lens holder 104 is gradually lowered (moves in Z-direction) to focus the image of field stop on the upper surface of the slide glass 122. As a result, an illumination state becomes optimum.

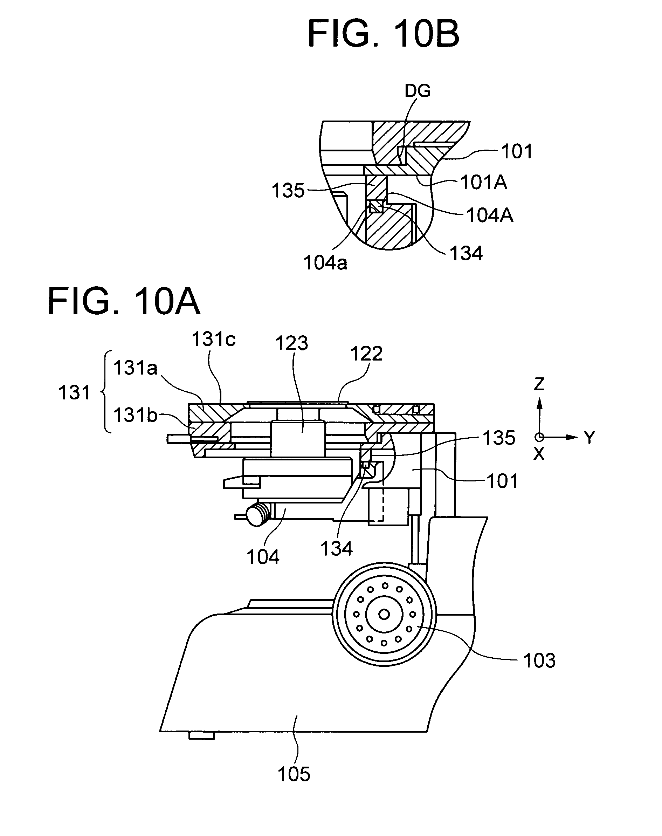

Then a case where the stage 121 constructed by three plates of the upper plate 121a, the middle plate 121b, and the lower plate 121c shown in Fig. 9 is replaced with a two-plate-construction stage 131 (thinner than the stage 121) of the upper plate 131a, and the lower plate 131b shown in Fig. 10A is explained with the construction of the microscope and adjusting method for illumination.

Fig. 10A is a partially sectioned side view showing a portion where a two-plate-construction stage installed in the microscope shown in Fig. 8, and Fig. 10B is a partially enlarged view thereof. A stage 131 is fixed on the upper surface of the substage 101. The stage 131 is constructed by two-plate-construction composed of an upper plate 131a, and a lower plate 131b. The upper plate 131a is movable in Y-direction with respect to the lower plate 131b. A slide glass 122 is placed on the upper surface 131c of the upper plate 131a, and the slide glass 122 is held by the upper plate 131a by means of a claw (not shown) movable in a direction (X-direction) perpendicular to the movement of the upper plate 131a. The lower plate 131b is fixed to the upper surface of the substage 101 through a round dovetail DG. With the configuration described above, the slide glass 122 can be moved two-dimensionally.

An adjusting piece 135 is disposed between the substage 101 and the condenser lens holder 104. The adjusting piece 135 is made from a magnet member such as iron, and is adsorbed by the condenser lens holder 104 by the magnet 134. A movement restriction member is composed of the magnet 134 and the adjusting piece 135. A positioning system for the condenser lens is composed of the condenser lens holder 104, the substage 101 and the movement restriction member.

When the three-plate-construction stage composed of 121a, 121b, and 121c shown in Fig. 9 is replaced by a two-plate-construction stage composed of 131a and 131b shown in Fig. 10A, the distance between the upper surface 104A of the condenser lens holder 104 and the upper plate 131a of the stage 131 becomes small. Since the shortened distance can be compensated by the adjusting piece 135, and upward movement of the condenser lens holder 104 is restricted, the condenser lens 123 does not move upward from the position shown in Fig. 10A. At this moment, the upper end of the condenser lens 123 is located lower than the upper surface 131c of the upper plate 131a, so that the condenser lens 123 does not hit the slide glass 122 or the stage 131.

Then, adjusting method for illumination state of the microscope equipped with the stage 131 composed of two plates of 131a and 131b shown in Fig. 10A is explained. The adjusting method is similar to the case where the three-plate-construction stage is attached.

At first, with rotating the stage up-and-down handle 103 to move the substage 101 up-and-down to focus on the upper surface (observation surface) of the slide glass 122. Then, stopping down the field stop (not shown) of the transmission illumination to get the image in the field.

Then, with focusing on the observation surface, the condenser lens holder 104 is moved up (in Z-direction). The condenser lens 123 is moved up in a body with the condenser lens holder 104. When the condenser lens holder 104 is further moved up, the upper end of the piece member 135 disposed on the upper surface 104A of the condenser lens holder 104 is in contact with the lower surface 101A of the substage 101. The upward movement of the condenser lens holder 104 is restricted by the piece member 135. In this instance, the upper end of the condenser lens 123 is located lower than the upper surface 131c of the upper plate 131a, so that the condenser lens 123 does not hit the slide glass 122 or the stage 131. In the case of not existing the piece member 135, as described before, when the condenser lens holder 104 is moved up, the condenser lens 123 hits the slide glass 122 or the stage 131 before the upper surface 104A of the condenser lens holder 104 contacts with the lower surface 101A of the substage 101.

With constructing in this manner, even if the stage 121 constructed by the upper plate 121a, the middle plate 121b, and the lower plate 121c is replaced by the stage 131 constructed by the upper plate 131a and the lower plate 131b, by using an adjusting method similar to the above-described adjusting method, Koehler illumination that is the optimum illumination state can be obtained.

When the stage 131 constructed by the upper plate 131a and the lower plate 131b is replaced by the stage 121 constructed by the upper plate 121a, the middle plate 121b, and the lower plate 121c, since the condenser lens 123 cannot be moved up to the position where optimum illumination state is obtained, the adjusting piece 135 is removed.

According to the present embodiment, since an amount of upward movement of the condenser lens holder 104 is restricted by the adjusting piece 135, not only in a case that the number of plates composing the stage is different as the present embodiment but also in a case that stages 121 and 131 having different thickness are used, the condenser lens 123 can be prevented from hitting the slide glass 122 or the stage 131.

In the present embodiment, although the magnet 134 is fixed to the condenser lens holder 104 side, the magnet 134 may be fixed to the substage 101 side. Although a minute gap exists between the adjusting piece 135 and the magnet 134, the adjusting piece 135 may be fitted by magnetic force.

As shown in Fig. 10B, although the magnet 134 is disposed on a dented portion 104a, the magnet 134 is preferably disposed slightly recessed portion of the lower surface 101A of the substage 101 where dented portion 104a is formed or the upper surface 104A of the condenser lens holder 104. A high flatness is required in the lower surface 101A of the substage 101 and the upper surface 104A of the condenser lens holder 104 where the magnet 134 is disposed. However, the magnet 134 is difficult to be processed with high flatness. Accordingly, it is not desirable to protrude the magnet 134.

### <Fifth Embodiment>

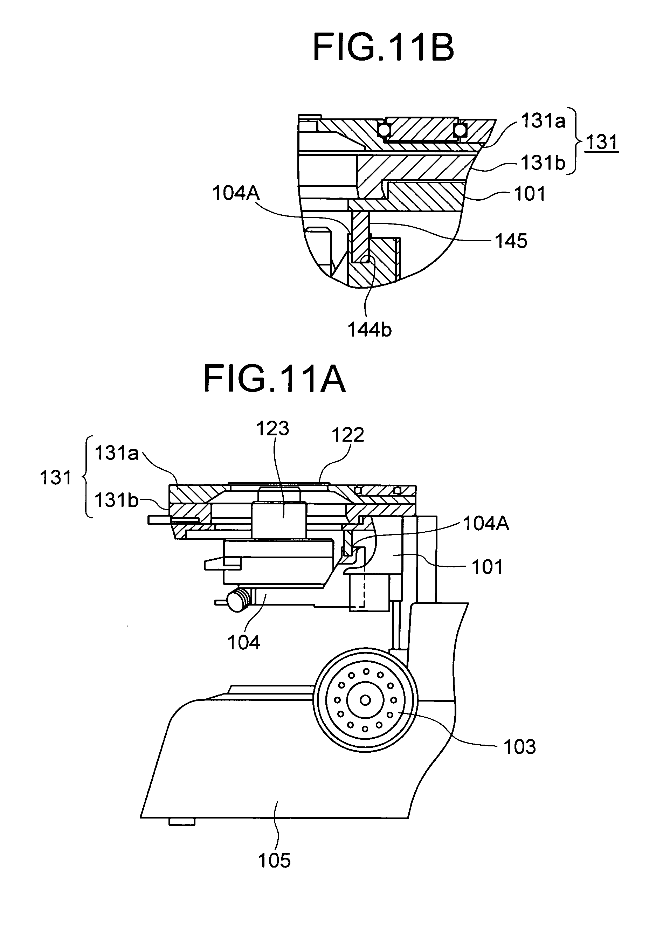

Fig. 11A is a partially sectioned view showing a portion of a microscope according to a fifth embodiment of the present invention. Fig. 11B is a partially enlarged view thereof. The common portion with the fourth embodiment is attached the same symbol to omit duplicated explanations.

The embodiment differs from the fourth embodiment such that a rod 145 (adjusting member) is fitted in a dented portion 144b formed on the upper surface 104A of the condenser lens holder 104 so as to prevent upward movement of the condenser lens holder 104. With providing a plurality of rods 145 having different length, various stages 131 having different thickness can be handled. The movement restriction member is composed of the dented portion 144b and the rod 145.

According to the present embodiment, the same effect as the fourth embodiment can be carried out. Since the magnet 134 as seen in the fourth embodiment may not be used, manufacturing cost can be reduced.

### <Sixth Embodiment>

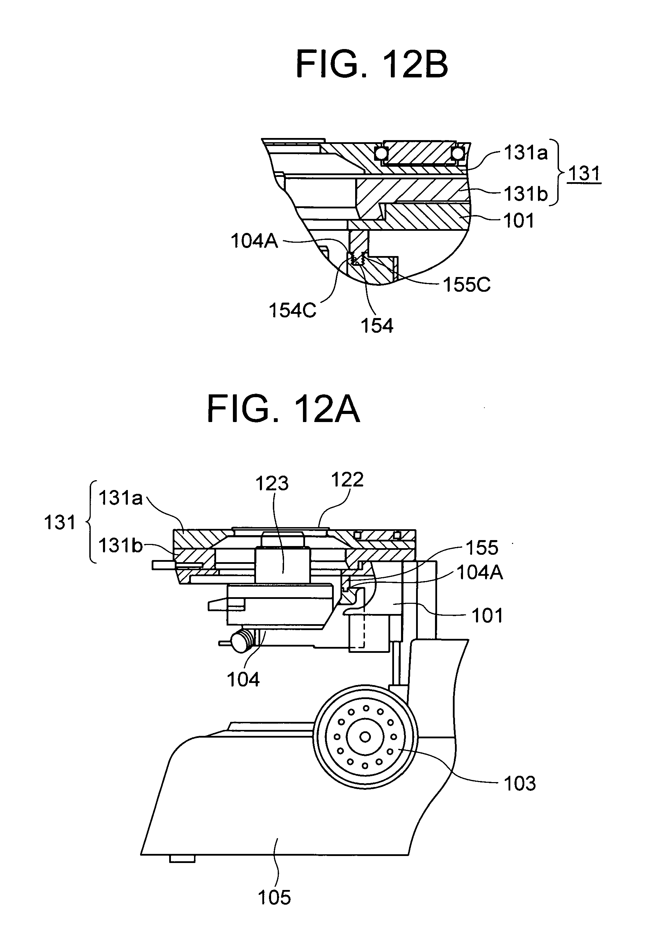

Fig. 12A is a partially sectioned view showing a portion of a microscope according to a sixth embodiment of the present invention, and Fig. 12B is a partially enlarged view thereof. The common portion with the fourth and the fifth embodiments is attached the same symbol to omit duplicated explanations.

The present embodiment differs from the fourth embodiment by the following point that a female screw 154C is formed on a dented portion 154 formed on the upper surface 104A of the condenser lens holder 104, and a male screw portion 155C of an adjusting screw 155 (adjusting member) is screwed to the female screw portion 154C so as to prevent upward movement of the condenser lens holder 104. With providing a plurality of adjusting screws 155 having different length, various stages 131 having different thickness can be handled. The movement restriction member is composed of the female screw 154C and the adjusting screw 155.

According to the sixth embodiment, since the adjusting screw 155 is used, fixing force of the adjusting screw 155 and the condenser lens holder 104 becomes stronger, so that the adjusting screw hardly comes off in comparison with the fourth and the fifth embodiment, as well as the similar effect of the fourth embodiment can be carried out.

As described above, with providing the movement restricting member for restricting the distance between the substage and the condenser lens in accordance with the thickness of the stage to be attached, the problem that occurs upon changing the stage with different thickness can be solved.

The above-described each embodiment is only shows a specific example for the purpose of better understanding of the present invention. Accordingly, it is needless to say that the invention in its broader aspect is not limited to the specific details and representative devices.

## Claims

1. A substage for a microscope comprising:
a plurality of fixing members for selectively fixing each of plurality of stages on which a sample is placed.

2. The substage according to claim 1, wherein one of the fixing members is a screw-tightening fixing member, and another of the fixing members is a fixing member using a round dovetail.

3. A microscope equipped with the substage according to claim 1 or 2.

4. A stage on which a sample is placed equipped with a plurality of fixing members for selectively being fixed to each of plurality of substages for a microscope equipped with respective fixing members.

5. The stage according to claim 4, wherein one of the fixing members is a screw-tightening fixing member, and another of the fixing members is a fixing member using a round dovetail.

6. A microscope equipped with the stage according to claim 4 or 5.

7. A microscope equipped with the substage according to claim 1 or 2, and the stage according to claim 4 or 5.

8. A microscope comprising:
the substage according to claim 1, the substage being capable of fixing stages with different thickness;
a condenser lens holder that is fixed movably in up-and-down direction to a lower portion of the substage and holds a condenser lens for conversing illumination light to a sample placed on the stage; and
a condenser-lens-positioning member that is provided between the substage and the condenser lens holder and is equipped with a movement-restricting member that restricts a distance between the substage and the condenser lens holder upon moving the condenser lens holder upward.

9. The condenser-lens-positioning member for a microscope according to claim 8, wherein the movement-restricting member consists of a magnet provided on one of the substage or the condenser lens holder and an adjusting member that is attracted by the magnet.

10. The condenser-lens-positioning member according to claim 9, wherein the magnet is provided on a dented portion formed on a lower surface of the substage or an upper surface of the condenser lens holder, and a tip of the magnet is located at a recessed position from the lower surface of the substage or the upper surface of the condenser lens holder.

11. The condenser-lens-positioning member for a microscope according to claim 8, wherein the movement-restricting member consists of a dented portion formed on an upper surface of the condenser lens holder and an adjusting member that can be fitted to the dented portion and is able to contact with a lower surface of the substage.

12. The condenser-lens-positioning member for a microscope according to claim 8, wherein the movement-restricting member consists of a female screw formed on an upper surface of the condenser lens holder and an adjusting member that includes a male screw portion capable of screwing the female screw, and is able to contact with a lower surface of the substage.
